# EUROPEAN PATENT APPLICATION

(11) **EP 3 196 440 A1**
(43) Date of publication of application: **26.07.2017**
(21) Application number: 17151675.0
(22) Date of filing: 16.01.2017
(51) Int. Cl.: F02C 3/20, F02C 3/24

(54) **ELECTRICAL POWER GENERATION SYSTEM FOR A DIRECTED ENERGY WEAPON AND METHOD**

(30) Priority: 19.01.2016 US 201615000505
(71) Applicant: Hamilton Sundstrand Corporation, Charlotte, NC 28217-4578 (US)
(72) Inventor: HIMMELMANN, Richard A., Beloit, WI Wisconsin 53511 (US); BAUCH, Timothy A., Rockford, IL Illinois 61107 (US); PAPAS, Paul, West Hartford, CT Connecticut 06117 (US)
(74) Representative: Hughes, Andrea Michelle

(57) **Abstract**

An electrical power generation system for a directed energy weapon includes a fuel pump (32) configured to disperse a liquid fuel. Also included is an oxidizer pump (34) configured to disperse a liquid oxidant. Further included is a combustor (30) fluidly coupled to the fuel pump and the oxidizer pump to receive the liquid fuel and the liquid oxidant for combustion therein to form a combustion mixture. Yet further included is a turbine (22) fluidly coupled to the combustor to receive the combustion mixture to generate mechanical energy. Also included is a generator (40) operatively coupled to a rotor shaft of the turbine to convert the mechanical energy to electrical power for the directed energy weapon.

## Description

### BACKGROUND OF THE DISCLOSURE

The embodiments herein generally relate to directed energy weapons and, more particularly, to an electrical power generation system for such weapons, as well as a method of generating electrical power for such weapons.

Directed energy weapons require large amounts of electricity. Due to the desire to place directed energy weapons on airborne platforms, there is a desire to reduce the size of the directed energy weapons systems so they may be placed on smaller aircraft and even space-based platforms. Challenges associated with implementation of directed energy weapons are present in applications that operate at high altitude (e.g., aircraft and spacecraft) based on the need for an electrical power generation system to operate in locations where there is little to no oxygen present. These challenges are unique to applications that are not land-based or on above surface ships, as these applications typically have ample space for large electrical power generation systems and a large supply of oxygen to draw from as an oxidizer that provides the opportunity to liberate energy from an energy storage media, such as jet fuel.

### BRIEF DESCRIPTION OF THE DISCLOSURE

According to one embodiment, an electrical power generation system for a directed energy weapon includes a fuel pump configured to disperse a liquid fuel. Also included is an oxidizer pump configured to disperse a liquid oxidant. Further included is a combustor fluidly coupled to the fuel pump and the oxidizer pump to receive the liquid fuel and the liquid oxidant for combustion therein to form a combustion mixture. Yet further included is a turbine fluidly coupled to the combustor to receive the combustion mixture to generate mechanical energy. Also included is a generator operatively coupled to a rotor shaft of the turbine to convert the mechanical energy to electrical power for the directed energy weapon.

According to another embodiment, a method of generating electrical power for a directed energy weapon is provided. The method includes pumping a liquid fuel to a combustor. The method also includes pumping a liquid oxidant to the combustor for combustion therein to form a combustion mixture. The method further includes routing the combustion mixture to a turbine to convert thermal energy of the combustion mixture to mechanical energy. The method yet further includes converting the mechanical energy to electrical power with a generator operatively coupled to a rotor shaft of the turbine.

### BRIEF DESCRIPTION OF THE DRAWINGS

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 is a perspective view of a directed energy weapon according to an embodiment;
FIG. 2 is a perspective view of the directed energy weapon according to another embodiment;
FIG. 3 is a perspective view of an electrical power generation system for the directed energy weapon;
FIG. 4 is a perspective, cross-sectional view of the electrical power generation system;
FIG. 5 is a perspective, cross-sectional view of a generator of the electrical power generation system;
FIG. 6 is an enlarged view of the generator of FIG. 5; and
FIG. 7 is a perspective view of a gear reduction arrangement operatively coupling a turbine and the generator of the electrical power generation system.

### DETAILED DESCRIPTION OF THE DISCLOSURE

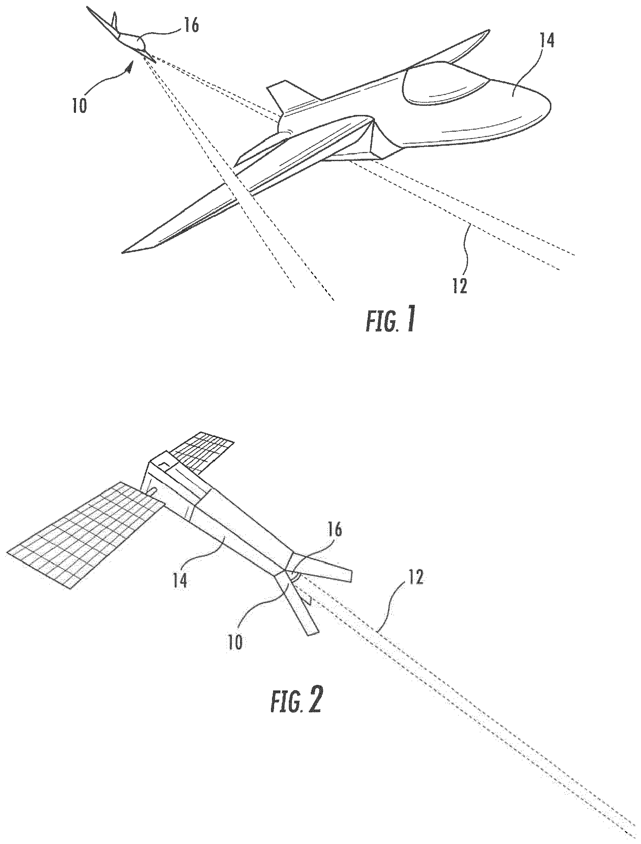

Referring to FIGS. 1 and 2, embodiments of a directed energy weapon are illustrated. In the illustrated embodiments, the directed energy weapon comprises a directed energy system 10 that facilitates generation of a directed energy weapon, such as a laser beam 12, onboard a vehicle 14 and guided control of the laser beam 12 away from the vehicle 14. The directed energy system 10 is beneficial in numerous applications, such as tactical weaponry, for example. As such, the embodiments described herein are advantageously operated on vehicles that require operation in environments which do not have atmospheric oxygen (i.e., oxygen gas) present. For example, the vehicle 14 may be a spacecraft (FIG. 1) or a high altitude aircraft (FIG. 2). Additionally, the vehicle 14 may be an undersea vessel that is completely submerged in fluid, such that oxygen gas is not readily available from the surrounding environment.

Although a laser beam 12 is illustrated and referenced herein, it is to be appreciated that the electricity generated by an electrical power generation system 20 (discussed in detail herein) could be used for other directed energy weapons, such as high power microwaves, high power radars, radar jammers, and electromagnetic rail guns.

The directed energy system 10 includes a laser generating assembly located onboard the vehicle 14. The location of the laser generating assembly may vary depending upon the particular embodiment of the vehicle 14. The laser generating assembly includes a plurality of components and subassemblies that in conjunction generate the laser beam 12. Such components relate to power management, weapons targeting, aircraft integration, laser module(s) and thermal cooling, for example. The preceding list is merely illustrative and not intended to be limiting. Irrespective of the precise components of the laser generating assembly, the generated laser beam 12 is routed along a laser carrying component to a laser turret 16 for transmission of the laser beam 12 away from the vehicle 14 to a target. The laser carrying component is operatively coupled to the laser turret 16 and the laser generating assembly. It is to be appreciated that a plurality of laser carrying components may be included to provide multiple laser paths, which may lead to a single laser turret or a plurality of laser turrets.

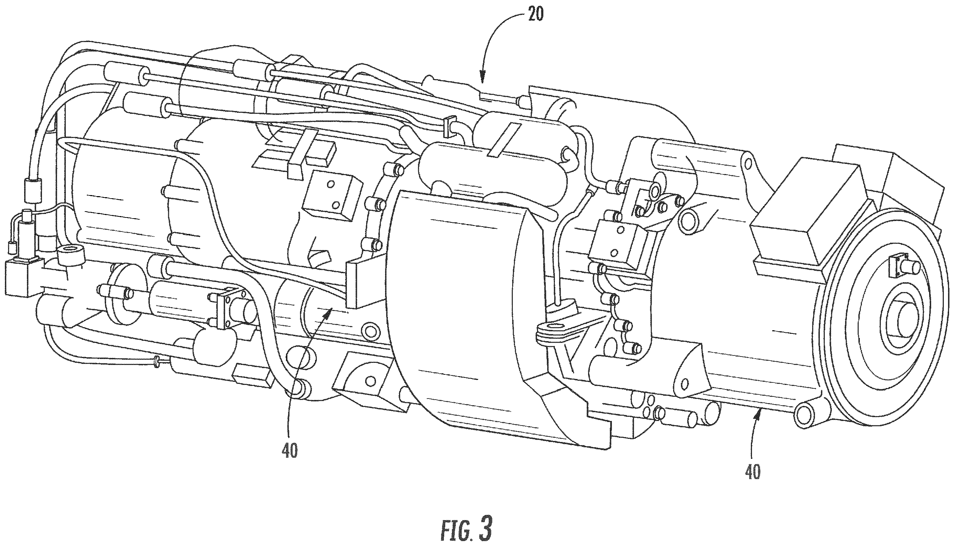

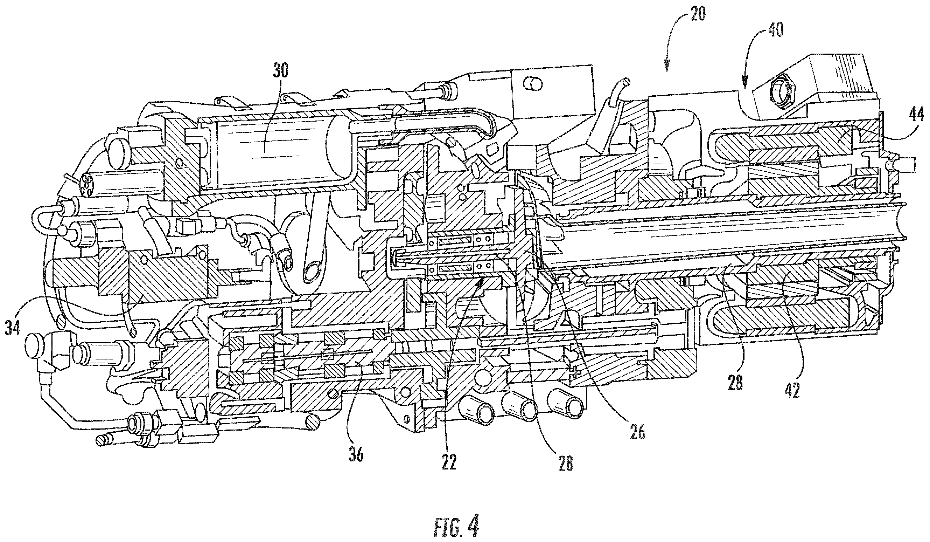

The directed energy system 10 requires significant power to maintain operation for an extended period of time. As shown in FIGS. 3 and 4, an electrical power generation system 20 is provided to generate and supply electrical power for the directed energy system 10. The electrical power generation system 20 is located onboard the vehicle 14 at any suitable location. By way of non-limiting example, in the case of a high altitude aircraft, the electrical power generation system 20 may be mounted in an underwing pod or in an aircraft fuselage. As will be appreciated from the description herein, the electrical power generation system 20 provides a high power density and its form factor is well suited for compact placement at desired locations of the vehicle 14.

The electrical power generation system 20 includes a turbine engine 22 that is operatively coupled to a generator 40 in order to generate electrical power to be supplied to the directed energy system 10. The turbine engine 22 includes at least one stage 26 of turbine blades operatively coupled to a turbine rotor 28. The stage 26 of turbine blades are rotated in response to a hot gas combustion mixture that passes over the blades subsequent to combustion in a combustor 30. The combustor 30 is supplied a liquid fuel with a fuel pump 32 and is supplied a liquid oxidant with an oxidizer pump 34. The liquid fuel and the liquid oxidant are mixed within the combustor 30 for combustion therein.

A coolant pump 36 is included in some embodiments to provide a coolant (e.g., water) to the combustor 30 during operation. The coolant pump 36 also provides lubrication and coolant to the rest of the turbine engine 22 and generator 40, as needed. Providing coolant to the combustor 30 reduces the flame temperature within the combustor 30 to reduce the likelihood of damage to turbine components, such as the turbine blades. Additionally, the coolant flashes off to steam in the case of water, which has a high molecular weight, providing additional fluid dynamic energy to the turbine blades, which increases the mechanical output of the turbine 22.

In an alternate embodiment, rather than the coolant pump 36, the electrical power generation system 20 may be configured to condense water generated in the combustor 30 (steam is a product produced from the fuel-oxidizer reaction itself) through a heat exchanger. The water may then be pumped and injected into the combustor 30 again to cool down the combustion temperature. Such an embodiment advantageously eliminates the added weight of carrying a water reservoir onboard the vehicle 14.

As noted above, the resultant combustion mixture is routed to the turbine to covert the chemical energy of the combustion mixture to mechanical energy in the form of rotation of the turbine blades and the turbine rotor 28. The liquid oxidant stored onboard the vehicle 14 alleviates the issue of not having readily available air, including atmospheric oxygen gas, that is typically ingested into a compressor and subsequently mixed with fuel in a combustor. Illustrative examples of liquid oxidants that may be employed include nitrous oxide, hydrogen peroxide, and liquid oxygen, however, it is to be understood that suitable alternative are contemplated. Therefore, the turbine engine 22 is a bi-propellant turbo system that relies solely on a liquid fuel and a liquid oxidant, both of which are stored onboard the vehicle 14.

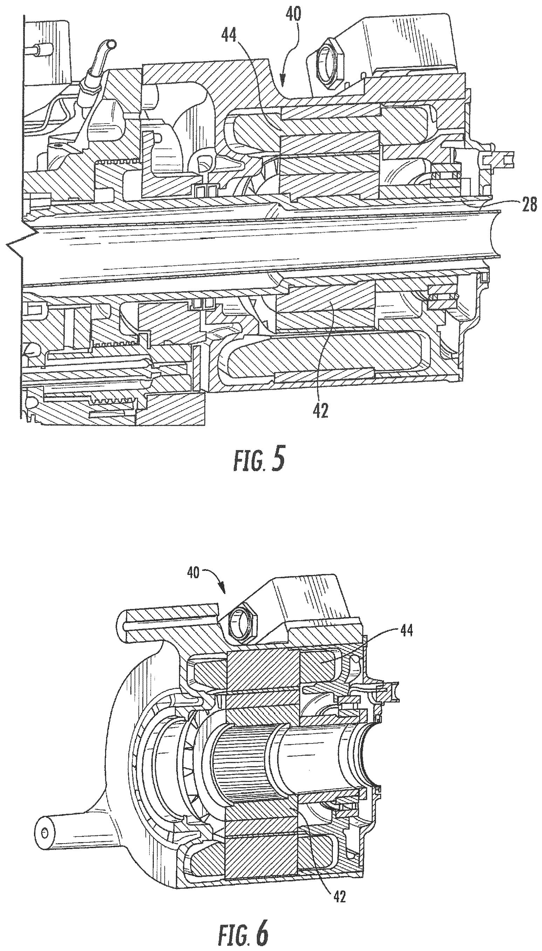

Referring now to FIGS. 5 and 6, with continued reference to FIGS. 3 and 4, the turbine rotor 28 is operatively coupled to a generator 40. The generator 40 converts the mechanical power of the rotating turbine rotor 28 into electrical power based on the interaction of the turbine rotor 28 and the generator 40. The generator 40 may be any suitable generator that may be stored onboard the vehicle 14 under the operating conditions of the vehicle. For example, the generator 40 may be a permanent magnet generator, a wound field generator, a switch reluctance generator, an inductance generator and a hybrid generator. The preceding list is merely exemplary and is not limiting of the type of generator to be employed. In some embodiments, the generator 40 is a 1 MW generator, but other power ratings are contemplated and the power rating will depend upon the particular application. Irrespective of the precise type of generator, the generator 40 includes a generator rotor 42 operatively coupled to the turbine rotor 28. Rotation of the generator rotor 42 interacts with a stator 44 to generate electrical power that is harnessed and selectively supplied to the directed energy system 10.

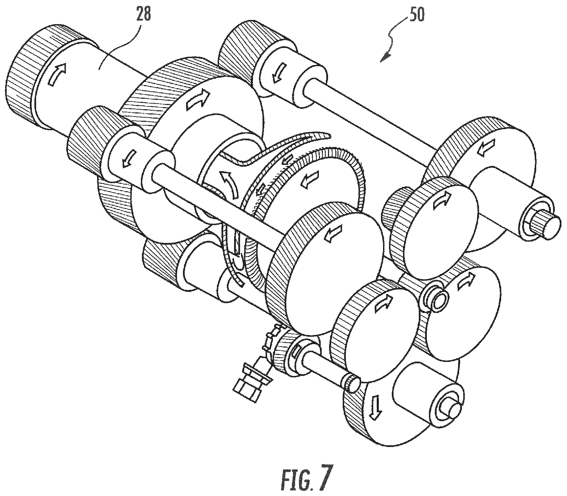

In some embodiments, it is desirable to manipulate the rotational output speed of the turbine rotor 28 in order to reduce the output speed to a speed that is suitable for the generator 40. In such embodiments, a gear reduction arrangement 50 is provided, as shown in FIG. 7. The gear reduction arrangement 50 is illustrated with a particular number of gears and shafts, but it is to be appreciated that the precise number of gears and shafts will depend upon the particular application and the necessary speed reduction. In one embodiment, the speed may be reduced from about 60,000 rpm to about 17,000 rpm.

Advantageously, the ability to combine a liquid fuel with a liquid oxidant gives the bi-propellant turbo-generator the ability to operate at extremely high altitudes or undersea, where atmospheric oxygen is not readily available.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. An electrical power generation system for a directed energy weapon comprising:
a fuel pump (32) configured to disperse a liquid fuel;
an oxidizer pump (34) configured to disperse a liquid oxidant;
a combustor (30) fluidly coupled to the fuel pump and the oxidizer pump to receive the liquid fuel and the liquid oxidant for combustion therein to form a combustion mixture;
a turbine (22) fluidly coupled to the combustor to receive the combustion mixture to generate mechanical energy; and
a generator (40) operatively coupled to a rotor shaft of the turbine to convert the mechanical energy to electrical power for the directed energy weapon.

2. The electrical power generation system of claim 1, further comprising a gear reduction arrangement (50) operatively coupled to a rotor shaft of the turbine and a generator rotor (42).

3. The electrical power generation system of any preceding claim, wherein the generator is one of a permanent magnet generator, a wound field generator, a switch reluctance generator, an induction generator, and a hybrid generator.

4. The electrical power generation system of any preceding claim, further comprising a coolant pump (36) configured to disperse a coolant to the combustor.

5. The electrical power generation system of claim 4, wherein the coolant comprises water.

6. The electrical power generation system of any preceding claim, wherein the liquid oxidant comprises nitrous oxide.

7. The electrical power generation system of any of claims 1 to 5, wherein the liquid oxidant comprises liquid oxygen.

8. The electrical power generation system of any preceding claim, wherein the electrical power generation system is disposed on a high altitude aircraft (14).

9. The electrical power generation system of any of claims 1 to 7, wherein the electrical power generation system is disposed on an undersea application.

10. The electrical power generation system of any preceding claim, wherein the directed energy weapon comprises at least one of a laser beam, high power microwaves, high power radars, radar jammers and electromagnetic rail guns.

11. A method of generating electrical power for a directed energy weapon comprising:
pumping a liquid fuel to a combustor;
pumping a liquid oxidant to the combustor for combustion therein to form a combustion mixture;
routing the combustion mixture to a turbine to convert thermal energy of the combustion mixture to mechanical energy; and
converting the mechanical energy to electrical power with a generator operatively coupled to a rotor shaft of the turbine.

12. The method of claim 11, wherein the power generation is performed in an atmosphere that does not have atmospheric oxygen present.

13. The method of claim 12, wherein the power generation is performed on a high altitude aircraft.

14. The method of claim 12, wherein the power generation is performed on an undersea application.

15. The method of any of claims 11 to 14, further comprising injecting at least one of coolant and recycled combustion products into the combustor.
